# EUROPEAN PATENT APPLICATION

(11) **EP 4 848 397 A1**
(43) Date of publication of application: **02.12.2026**
(21) Application number: 26181356.2
(22) Date of filing: 27.05.2026
(51) Int. Cl.: H01M 10/0567, H01M 10/42, H01M 10/0569

(54) **COMPOSITION FOR ELECTROLYTE AND ELECTROLYTE FOR SECONDARY BATTERY PREPARED THEREFROM**

(30) Priority: 27.05.2025 KR 20250069117; 26.05.2026 KR 20260095236
(71) Applicant: SK On Co., Ltd., Seoul 03161 (KR)
(72) Inventor: HAN, Jung Hun, 34124 Daejeon (KR); GO, Hyeon Jin, 34124 Daejeon (KR); BAN, Hee Jung, 34124 Daejeon (KR); LEE, Han Sol, 34124 Daejeon (KR)
(74) Representative: Prüfer & Partner mbB Patentanwälte · Rechtsanwälte

(57) **Abstract**

A composition for an electrolyte according to embodiments of the present disclosure includes a liquid electrolyte, a fluorinated mono(meth)acrylate compound, and a polyfunctional (meth)acrylate compound. An electrolyte for a secondary battery according to embodiments of the present disclosure includes a liquid electrolyte, a flame-retardant polymer including a first moiety derived from a fluorinated mono(meth)acrylate compound and a second moiety derived from a polyfunctional (meth)acrylate compound. The flame-retardant properties of the secondary battery may be improved.

## Description

### [BACKGROUND OF THE INVENTION]

### 1. Field of the Invention

The present disclosure relates to a composition for an electrolyte and an electrolyte for a secondary battery prepared therefrom.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively researched and developed due to its high operating voltage, high energy density per unit weight, and advantages in charging speed and weight reduction.

The lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

A liquid electrolyte, a gel electrolyte, and a polymer electrolyte may be used as the electrolyte. Although the liquid electrolyte has high ionic conductivity, the stability of the secondary battery may be reduced due to the risk of leakage, flammability, and high-temperature volatility.

### [SUMMARY OF THE INVENTION]

An object of the present disclosure is to provide a composition for an electrolyte having improved flame retardancy.

Another object of the present disclosure is to provide an electrolyte for a secondary battery having improved flame retardancy.

Still another object of the present disclosure is to provide a secondary battery including the electrolyte and having improved flame retardancy.

A composition for an electrolyte according to embodiments of the present disclosure includes: a liquid electrolyte; a fluorinated mono(meth)acrylate compound; and a polyfunctional (meth)acrylate compound.

According to exemplary embodiments, the polyfunctional (meth)acrylate compound may include one or more of a tri(meth)acrylate compound and a tetra(meth)acrylate compound.

According to exemplary embodiments, the polyfunctional (meth)acrylate compound may further include ethylene oxide repeating units.

According to exemplary embodiments, the total content of the fluorinated mono(meth)acrylate compound and the polyfunctional (meth)acrylate compound may be 3% by weight to 15% by weight based on the total weight of the composition for an electrolyte.

According to exemplary embodiments, a weight ratio of the fluorinated mono(meth)acrylate compound to the polyfunctional (meth)acrylate compound may be 0.3 to 2.

An electrolyte for a secondary battery according to embodiments of the present disclosure includes: a liquid electrolyte; and a flame-retardant polymer including a first moiety derived from a fluorinated mono(meth)acrylate compound and a second moiety derived from a polyfunctional (meth)acrylate compound.

According to exemplary embodiments, the first moiety may include a first repeating unit represented by Formula 1 below:

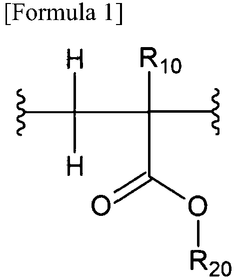

In Formula 1, R₁₀ is hydrogen or methyl, and R₂₀ is a fluorine-substituted alkyl group having 1 to 10 carbon atoms, or a fluorine-substituted alkenyl group having 2 to 10 carbon atoms.

According to exemplary embodiments, the second moiety may include a second repeating unit represented by Formula 2 or Formula 3 below.

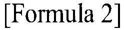

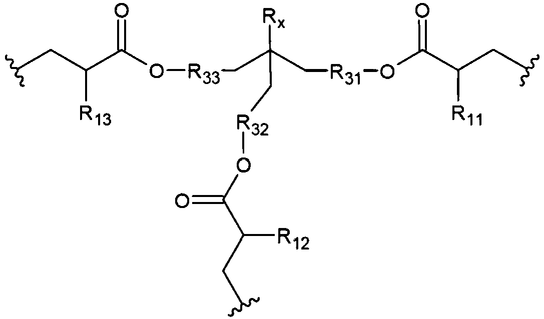

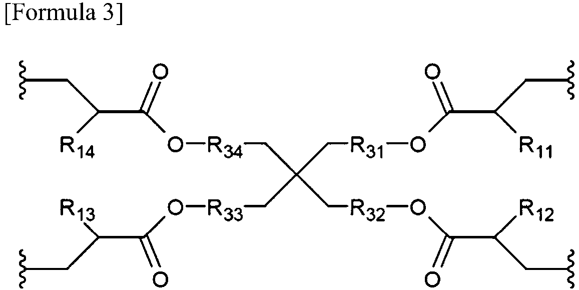

In Formulas 2 and 3, Rₓ is hydrogen, an alkyl group having 1 to 10 carbon atoms, or an alkenyl group having 2 to 10 carbon atoms; R₁₁, R₁₂, R₁₃, and R₁₄ are each independently hydrogen or methyl; and R₃₁, R₃₂, R₃₃, and R₃₄ are each independently a direct bond, an alkylene group having 1 to 10 carbon atoms, or -(CH₂CH₂O)ₙ-; and n is an integer of 1 to 10.

According to exemplary embodiments, the fluorine content based on the total weight of the flame-retardant polymer may be 0.5% by weight to 20% by weight.

According to exemplary embodiments, the content of the flame-retardant polymer may be 3% by weight to 15% by weight based on the total weight of the electrolyte for a secondary battery.

According to exemplary embodiments, a weight ratio of the first moiety to the second moiety may be 0.3 to 2.

According to exemplary embodiments, the liquid electrolyte may include a lithium salt and an organic solvent.

According to exemplary embodiments, the organic solvent may include one or more of a linear carbonate and a cyclic carbonate.

According to exemplary embodiments, the linear carbonate may include one or more of dimethyl carbonate, ethyl methyl carbonate, diethyl carbonate, methyl propyl carbonate, ethyl propyl carbonate, and dipropyl carbonate, and the cyclic carbonate may include one or more of ethylene carbonate, propylene carbonate, and butylene carbonate.

A secondary battery according to embodiments of the present disclosure includes: a case; an electrode assembly including a cathode and an anode accommodated within the case; and the above-described electrolyte for a secondary battery injected into the case.

The composition for an electrolyte according to embodiments of the present disclosure may include a fluorinated mono(meth)acrylate compound and a polyfunctional (meth)acrylate compound. In addition, the electrolyte formed from the composition for an electrolyte may include a flame-retardant polymer including a first moiety derived from the fluorinated mono(meth)acrylate compound and a second moiety derived from the polyfunctional (meth)acrylate compound.

Accordingly, a polymer electrolyte including a flame-retardant functional group may be formed, thereby suppressing overheating and internal gas generation. Thus, the stability of the secondary battery may be improved.

The composition for an electrolyte and the electrolyte prepared therefrom may be widely applied in green technology fields including electric vehicles, battery charging stations, and renewable energy systems using batteries, such as photovoltaics and wind power generation. In addition, the lithium secondary battery may be used in eco-friendly electric vehicles and hybrid vehicles to suppress air pollution and greenhouse gas emissions, thereby contributing to mitigating climate change.

### [BRIEF DESCRIPTION OF THE DRAWINGS]

The above and other objects, features and advantages of the present disclosure will be more clearly understood from the following detailed description taken in conjunction with the accompanying drawings, in which:

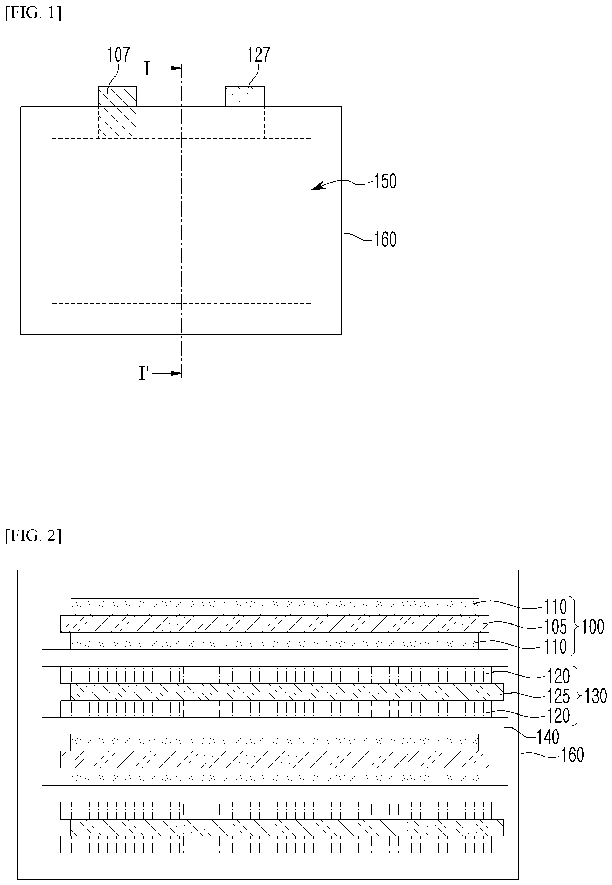

FIGS. 1 and 2 are a schematic plan view and a schematic cross-sectional view, respectively, illustrating a lithium secondary battery according to exemplary embodiments.

### [DETAILED DESCRIPTION OF THE INVENTION]

An object of the present disclosure is to provide a composition for an electrolyte having enhanced flame retardancy. In addition, another object of the present disclosure is to provide an electrolyte for a secondary battery prepared therefrom (hereinafter, also abbreviated as "electrolyte"), and a secondary battery including the electrolyte.

Unless otherwise defined, all technical and scientific terms used herein have the same meaning as commonly understood by one of ordinary skill in the art to which the present disclosure pertains. Terms used in the description of the present disclosure are merely intended to effectively describe specific embodiments and are not intended to limit the present disclosure.

The singular forms "a," "an" and "the" are intended to include plural forms as well, unless the context clearly indicates otherwise.

The term "A and/or B" as used in the present specification may refer to an embodiment including both A and B, or an embodiment including either A or B.

As used herein, "alkyl" is an organic group from which one hydrogen has been removed from an aliphatic hydrocarbon, and may include both straight-chain and branched-chain forms. For example, the alkyl may include methyl, ethyl, propyl, isopropyl, butyl, isobutyl, t-butyl, pentyl, hexyl, ethylhexyl, and the like.

As used herein, the term "alkenyl" is an organic group from which one hydrogen has been removed from a hydrocarbon including a double bond, and may include both straight-chain and branched-chain forms. For example, the alkenyl may include ethenyl, propenyl, butenyl, pentenyl, hexenyl, and the like.

As used herein, "(meth)acryl-" may be used to mean "methacryl-", "acryl-", or both.

As used herein, the term "A compound" may refer to a compound including a functional group A and a derivative thereof.

As used herein, the term "fluorinated" may indicate a case where one or more hydrogen atoms are substituted with fluorine. For example, fluorinated methane may include fluoromethane, difluoromethane, trifluoromethane, and the like.

As used herein, the term "polymer electrolyte" may refer to an electrolyte in an all-solid state and a gel polymer electrolyte. For example, the gel polymer electrolyte may include a gel classified according to a preparation method. For example, the gel polymer electrolyte may include a form in which the electrolyte is swollen after the preparation of a polymer matrix (Physical gel), or a form prepared by curing a composition in which the electrolyte and a monomer are mixed (Chemical gel).

Hereinafter, embodiments of the present invention will be described in detail with reference to the drawings.

According to exemplary embodiments, the composition for an electrolyte includes a liquid electrolyte, a fluorinated mono(meth)acrylate compound, and a polyfunctional (meth)acrylate compound.

The liquid electrolyte may include a non-aqueous electrolyte.

According to exemplary embodiments, the non-aqueous electrolyte may include a lithium salt and an organic solvent.

The lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻_{,} CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and the like may be exemplified.

For example, the concentration of the lithium salt may be 0.01 M to 5 M or 0.01 M to 2 M based on the organic solvent. Within the concentration range, lithium ions and/or electrons may smoothly migrate during the charging and discharging of the battery.

The organic solvent may include an organic compound which has sufficient solubility for the lithium salt and the additive, and is electrochemically stable without exhibiting reactivity in the battery. For example, the organic solvent may include at least one of a carbonate solvent, an ester solvent, an ether solvent, a ketone solvent, an alcohol solvent and an aprotic solvent.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate, methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, γ-butyrolactone, propylene sulfite, and the like may be used. These may be used alone or in combination of two or more thereof.

According to exemplary embodiments, the organic solvent may include one or more of a linear carbonate and a cyclic carbonate. Accordingly, the electrical properties of the secondary battery may be maintained.

For example, the linear carbonate may include dimethyl carbonate (DMC), ethyl methyl carbonate (EMC), diethyl carbonate (DEC), methyl propyl carbonate, ethyl propyl carbonate, dipropyl carbonate, methyl butyl carbonate, and the like.

For example, the cyclic carbonate may include ethylene carbonate (EC), propylene carbonate (PC), butylene carbonate, vinylene carbonate, fluoroethylene carbonate, trimethylene carbonate, and the like.

According to exemplary embodiments, the linear carbonate may include one or more of dimethyl carbonate, ethyl methyl carbonate, diethyl carbonate, methyl propyl carbonate, ethyl propyl carbonate, and dipropyl carbonate.

According to exemplary embodiments, the cyclic carbonate may include one or more of ethylene carbonate, propylene carbonate, and butylene carbonate.

The linear carbonate and the cyclic carbonate may be used to form a polymer electrolyte with the acrylate compounds.

In some embodiments, the organic solvent may include a linear carbonate and a cyclic carbonate. For example, the organic solvent may include a mixed solvent of the linear carbonate and the cyclic carbonate.

In some embodiments, the content of the linear carbonate based on the total volume of the organic solvent may be 50% by volume ("vol%") or more, 50 vol% to 90 vol%, 60 vol% to 85 vol%, or 65 vol% to 80 vol%.

In some embodiments, the content of the cyclic carbonate based on the total volume of the organic solvent may be 50 vol% or less, 10 vol% to 50 vol%, 15 vol% to 40 vol%, or 20 vol% to 35 vol%.

Within the above ranges, a polymer electrolyte having a gel form may be formed.

The fluorinated mono(meth)acrylate compound may include one or more fluorine atoms and one (meth)acrylate group.

For example, the fluorinated mono(meth)acrylate compound may include tetrafluoropropyl methacrylate (TFPMA), tetrafluoropropyl acrylate (TFPA), hexafluoroisopropyl methacrylate (HFPMA), hexafluoroisopropyl acrylate (HFPA), hexafluorobutyl acrylate, perfluorobutyl methacrylate, perfluorobutyl acrylate, perfluorobutyl ethyl acrylate, perfluorobutyl ethyl methacrylate, perfluorooctyl methacrylate, perfluorooctyl acrylate, and the like.

According to exemplary embodiments, the number of fluorine atoms in the fluorinated mono(meth)acrylate compound may be 3 or more, 4 or more, 5 or more, or 6 or more. Accordingly, the thermal decomposition temperature of the electrolyte may be increased, and a fluorinated compound may be released during the thermal decomposition process, thereby suppressing the flame chain reaction.

According to exemplary embodiments, the fluorinated mono(meth)acrylate compound may include a compound represented by Formula 4 below.

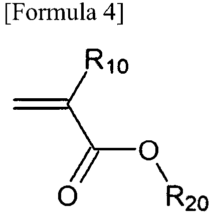

In Formula 4, R₁₀ is hydrogen or methyl, and R₂₀ is a fluorine-substituted alkyl group having 1 to 10 carbon atoms, or a fluorine-substituted alkenyl group having 2 to 10 carbon atoms.

In some embodiments, R₁₀ may be hydrogen.

In some embodiments, R₂₀ may be a fluorine-substituted alkyl group having 1 to 10 carbon atoms. In some embodiments, R₂₀ may be a fluorine-substituted alkyl group having 2 to 8 carbon atoms.

Accordingly, flame retardancy may be ensured while suppressing the degradation of electrical properties of the secondary battery including the electrolyte.

The polyfunctional (meth)acrylate compound may include two or more (meth)acrylate groups. Two or more (meth)acrylate groups may be included in one compound.

For example, the polyfunctional (meth)acrylate compound may include a di(meth)acrylate including two (meth)acrylate groups, a tri(meth)acrylate including three (meth)acrylate groups, and a tetra(meth)acrylate including four (meth)acrylate groups, and the like.

For example, the di(meth)acrylate may include ethylene glycol diacrylate, ethylene glycol dimethacrylate, triethylene glycol diacrylate, polyethylene glycol diacrylate, hexanediol diacrylate, butanediol diacrylate, and the like.

For example, the tri(meth)acrylate may include trimethylolpropane triacrylate, trimethylolpropane trimethacrylate, pentaerythritol triacrylate, pentaerythritol trimethacrylate, trimethylolpropane ethoxylate triacrylate, trimethylolpropane ethoxylate trimethacrylate, tris(2-hydroxyethyl) isocyanurate triacrylate, and the like.

For example, the tetra(meth)acrylate may include pentaerythritol tetraacrylate, pentaerythritol tetramethacrylate, pentaerythritol ethoxylate tetraacrylate, pentaerythritol ethoxylate tetramethacrylate, and the like.

According to exemplary embodiments, the polyfunctional (meth)acrylate compound may include one or more of tri(meth)acrylate compounds and tetra(meth)acrylate compounds. Accordingly, appropriate crosslinking may be formed, thereby ensuring flame retardancy. For example, if five or more acrylate groups are included, the migration of ions or electrons may be inhibited by unnecessary crosslinking, which may impair the electrical properties of the secondary battery. For example, if two or less acrylate groups are included, a gel may not be formed, and the flame retardancy of the electrolyte may not be achieved.

According to exemplary embodiments, the polyfunctional (meth)acrylate compound may include ethylene oxide repeating units.

The ethylene oxide repeating units may be represented by the following structure.

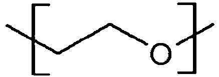

For example, one or more ethylene oxide repeating units may be included in the structure of the polyfunctional (meth)acrylate compound. The ethylene oxide repeating units may be included to control the molecular length of the polyfunctional (meth)acrylate compound, and the degree of crosslinking with the fluorinated mono(meth)acrylate compound may be controlled through the control of the molecular length.

According to exemplary embodiments, the tri(meth)acrylate compound may include a compound represented by Formula 5 below.

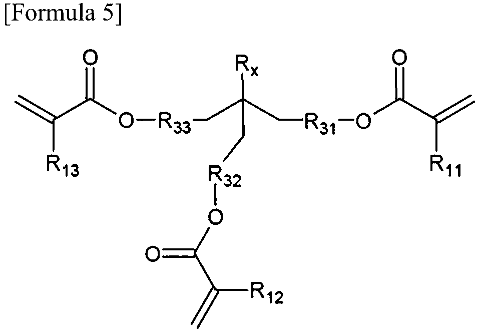

In Formula 5, Rₓ is hydrogen, an alkyl having 1 to 10 carbon atoms, or an alkenyl having 2 to 10 carbon atoms;
R₁₁, R₁₂, and R₁₃ are each independently hydrogen or methyl;
R₃₁, R₃₂, and R₃₃ are each independently a direct bond, an alkylene having 1 to 10 carbon atoms, or -(CH₂CH₂O)ₙ-; and n is an integer of 1 to 10.

In some embodiments, in Formula 5, Rₓ may be hydrogen or an alkyl having 1 to 5 carbon atoms.

In some embodiments, in Formula 5, R₁₁, R₁₂, and R₁₃ may be hydrogen.

In some embodiments, in Formula 5, R₃₁, R₃₂, and R₃₃ are each independently a direct bond, an alkylene having 1 to 5 carbon atoms, or -(CH₂CH₂O)ₙ-; and n may be an integer of 1 to 10.

In some embodiments, in Formula 5, R₃₁, R₃₂, and R₃₃ are each independently a direct bond or -(CH₂CH₂O)ₙ-, and n may be an integer of 1 to 5.

In one embodiment, in Formula 5, R₃₁, R₃₂, and R₃₃ are -(CH₂CH₂O)ₙ-, and n may be an integer of 1 to 3.

According to exemplary embodiments, the tetra(meth)acrylate compound may include a compound represented by Formula 6 below.

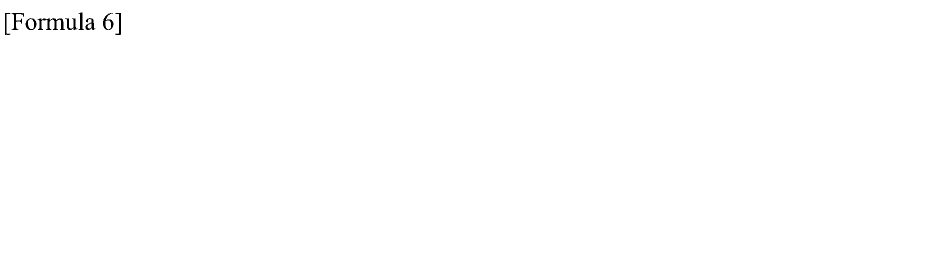

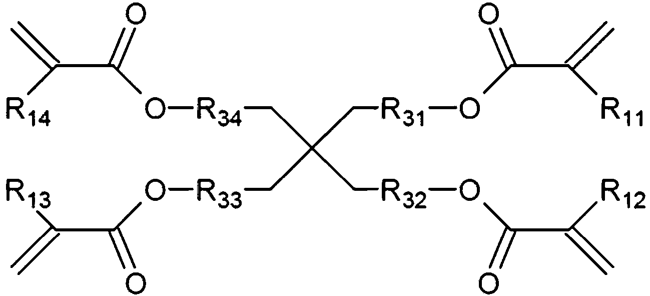

In Formula 6, R₁₁, R₁₂, R₁₃, and R₁₄ are each independently hydrogen or methyl.

In Formula 6, R₃₁, R₃₂, R₃₃, and R₃₄ are each independently a direct bond, an alkylene having 1 to 10 carbon atoms or -(CH₂CH₂O)ₙ-, and n is an integer of 1 to 10.

In some embodiments, in Formula 6, R₁₁, R₁₂, R₁₃, and R₁₄ may be hydrogen.

In some embodiments, in Formula 6, R₃₁, R₃₂, R₃₃, and R₃₄ are each independently a direct bond, an alkylene having 1 to 5 carbon atoms or -(CH₂CH₂O)ₙ-, and n is an integer of 1 to 10.

In some embodiments, in Formula 6, R₃₁, R₃₂, R₃₃, and R₃₄ may each independently be a direct bond or -(CH₂CH₂O)ₙ-, and n may be an integer of 1 to 5.

In one embodiment, in Formula 6, R₃₁, R₃₂, R₃₃, and R₃₄ may be -(CH₂CH₂O)ₙ-, and n may be an integer of 1 to 3.

In one embodiment, in Formula 6, R₃₁, R₃₂, R₃₃, and R₃₄ may be a direct bond.

The tri(meth)acrylate compounds and tetra(meth)acrylate compounds, each represented by the formulas, may form a polymer structure in which the main chains are interconnected together with the fluorinated mono(meth)acrylate compounds. Accordingly, the flame-retardant properties of the electrolyte may be further improved.

According to exemplary embodiments, the total content of the fluorinated mono(meth)acrylate compound and the polyfunctional (meth)acrylate compound may be 3 wt% to 15 wt% based on the total weight of the composition for an electrolyte.

In some embodiments, the total content of the fluorinated mono(meth)acrylate compound and the polyfunctional (meth)acrylate compound may be 4 wt% to 13 wt%, 4.5 wt% to 12.5 wt%, 5 wt% to 11 wt%, or 5 wt% to 10 wt% based on the total weight of the composition for an electrolyte.

Within the above range, the degradation of the electrical properties of the secondary battery may be suppressed. For example, if the total content exceeds the above range, the ionic conductivity of the flame-retardant polymer formed by the (meth)acrylate compounds may be low, which may reduce the charging speed and energy density of the secondary battery. For example, if the total content is less than the above range, flame-retardant properties may not be achieved.

According to exemplary embodiments, a weight ratio of the fluorinated mono(meth)acrylate compound to the polyfunctional (meth)acrylate compound may be 0.3 to 2.

In some embodiments, the weight ratio of the fluorinated mono(meth)acrylate compound to the polyfunctional (meth)acrylate compound may be 0.4 to 1.8, 0.5 to 1.6, 0.5 to 1.5, or 0.6 to 1.5.

For example, the weight ratio may vary slightly depending on the type of the polyfunctional (meth)acrylate compound.

According to exemplary embodiments, the weight ratio of the fluorinated mono(meth)acrylate compound to the tri(meth)acrylate compound may be 0.4 to 1.8, 0.5 to 1.6, 0.5 to 1.5, or 0.6 to 1.5.

According to exemplary embodiments, the weight ratio of the fluorinated mono(meth)acrylate compound to the tetra(meth)acrylate compound may be 0.35 to 1.8, 0.38 to 1.6, 0.4 to 1.55, or 0.42 to 1.5.

Within the above ranges, the formation of the polymer electrolyte may be promoted, mechanical stability may be improved, and the rate capability of the secondary battery including the polymer electrolyte may be ensured.

According to exemplary embodiments, the composition for an electrolyte may further include an additive. The additive may include, for example, a cyclic carbonate compound, a fluorine-substituted carbonate compound, a sultone compound, a cyclic sulfate compound, a cyclic sulfite compound, a phosphate compound, and a borate compound.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

According to exemplary embodiments, the content of the additive may be about 0.05 wt% to 10 wt%, 0.1 wt% to 5 wt%, or 0.2 wt% to 4 wt% based on the total weight of the liquid electrolyte. Within this range, flame retardancy through the electrolyte may be achieved, the durability of the film formed on the electrode may be enhanced, and high-temperature storage characteristics, resistance characteristics, and the like may be improved.

In some embodiments, the composition for an electrolyte may further include a polymerization initiator. For example, the composition for an electrolyte may include a radical polymerization initiator, an anionic polymerization initiator, a cationic polymerization initiator, a photoinitiator, and a thermal initiator. For example, photoinitiators such as acetophenones, anthraquinones, ketals, benzophenones, and oxime esters may be used, and thermal initiators such as t-butyl peroxypivalate (t-BPP), dicumyl peroxide (DCP), and azobisisobutyronitrile (AIBN) may be used. For example, the content of the initiator may be 0.001 wt% to 0.1 wt%, 0.01 wt% to 0.08 wt%, 0.02 wt% to 0.06 wt%, or 0.04 wt% to 0.05 wt% based on the total weight of the composition for an electrolyte.

The electrolyte for a secondary battery according to embodiments of the present disclosure may include a liquid electrolyte according to the above-described embodiments. In addition, the electrolyte for a secondary battery may include a flame-retardant polymer including a first moiety derived from the fluorinated mono(meth)acrylate compound according to the above-described embodiments, and a second moiety derived from the polyfunctional (meth)acrylate compound according to the above-described embodiments.

For example, the weight ratio and total content of the above-described fluorinated mono(meth)acrylate compound and the polyfunctional (meth)acrylate compound may be maintained within a similar range in the flame-retardant polymer.

For example, the liquid electrolyte, the fluorinated mono(meth)acrylate compound, and the polyfunctional (meth)acrylate compound may be sufficiently mixed, a polymerization initiator may be added, and then cured to form an electrolyte. For example, a flame-retardant polymer may be formed by the polymerization and crosslinking of the fluorinated mono(meth)acrylate compound and the polyfunctional (meth)acrylate compound.

According to exemplary embodiments, the electrolyte may be a polymer electrolyte. Lithium ions may dissolve and migrate within the matrix of the polymer electrolyte, thereby improving the ionic conductivity of the secondary battery. Furthermore, as the electrolyte exists in a polymer form, the risk of leakage is reduced, and it may be maintained stably under high-temperature conditions, which may improve the high-temperature stability of the secondary battery.

According to exemplary embodiments, the first moiety may include a first repeating unit represented by Formula 1 below.

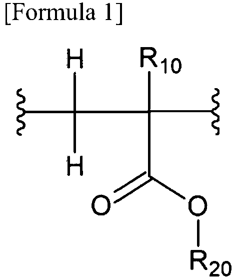

In Formula 1, R₁₀ is hydrogen or a methyl group, and R₂₀ is a fluorine-substituted alkyl group having 1 to 10 carbon atoms, or a fluorine-substituted alkenyl group having 2 to 10 carbon atoms.

For example, in Formula 1, R₁₀ and R₂₀ may each be identical to R₁₀ and R₂₀ in Formula 4.

According to exemplary embodiments, the second moiety may include a second repeating unit represented by Formula 2 or Formula 3 below.

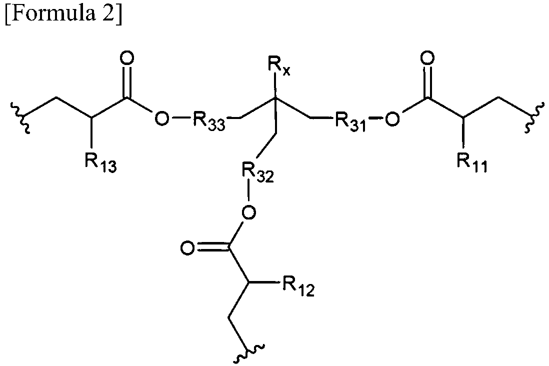

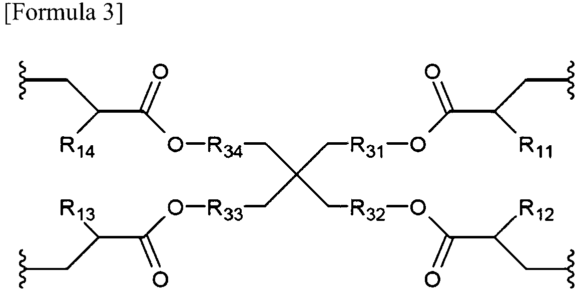

In Formulas 2 and 3, Rₓ is hydrogen, an alkyl group having 1 to 10 carbon atoms, or an alkenyl group having 2 to 10 carbon atoms;
R₁₁, R₁₂, R₁₃, and R₁₄ are each independently hydrogen or a methyl group;
R₃₁, R₃₂, R₃₃, and R₃₄ are each independently a direct bond, an alkylene group having 1 to 10 carbon atoms, or -(CH₂CH₂O)ₙ-; and n is an integer of 1 to 10.

For example, in Formula 2, Rₓ, R₁₁, R₁₂, R₁₃, R₃₁, R₃₂, and R₃₃ may each be identical to Rₓ, R₁₁, R₁₂, R₁₃, R₃₁, R₃₂, and R₃₃ in Formula 5.

For example, in Formula 3, R₁₁, R₁₂, R₁₃, R₁₄, R₃₁, R₃₂, R₃₃, and R₃₄ may each be identical to R₁₁, R₁₂, R₁₃, R₁₄, R₃₁, R₃₂, R₃₃, and R₃₄ in Formula 6.

According to exemplary embodiments, the content of the flame-retardant polymer may be 3 wt% to 15 wt% based on the total weight of the electrolyte for a secondary battery. In some embodiments, the content of the flame-retardant polymer may be 4 wt% to 13 wt%, 4.5 wt% to 12.5 wt%, 5 wt% to 11 wt%, or 5 wt% to 10 wt% based on the total weight of the electrolyte for a secondary battery. Within this range, the improved electrical properties of the secondary battery may be maintained, and flame-retardant properties may be achieved.

According to exemplary embodiments, a weight ratio of the first moiety to the second moiety may be 0.3 to 2. In some embodiments, the weight ratio of the first moiety to the second moiety may be 0.4 to 1.8, 0.5 to 1.6, 0.5 to 1.5, or 0.6 to 1.5.

For example, the weight ratio may vary slightly depending on the type of the second moiety. For example, if the second moiety includes the second repeating unit represented by Formula 2, the weight ratio of the first moiety to the second moiety may be 0.4 to 1.8, 0.5 to 1.6, 0.5 to 1.5, or 0.6 to 1.5. For example, if the second moiety includes the second repeating unit represented by Formula 3, the weight ratio of the first moiety to the second moiety may be 0.35 to 1.8, 0.38 to 1.6, 0.4 to 1.55, or 0.42 to 1.5. Within this range, the flame-retardant properties of the electrolyte may be further improved.

According to exemplary embodiments, the fluorine content based on the total weight of the flame-retardant polymer may be 0.5 wt% to 20 wt%.

In some embodiments, the fluorine content based on the total weight of the flame-retardant polymer may be 0.6 wt% to 19.9 wt%, 0.7 wt% to 19.8 wt%, 0.75 wt% to 18 wt%, 0.9 wt% to 17 wt%, or 1.0 wt% to 16 wt%.

Within the above ranges, the thermal decomposition temperature of the electrolyte may be increased by the number of carbon-fluorine bonds. In addition, thermal runaway of the secondary battery may be suppressed due to inertness to oxygen during a combustion process. For example, if the fluorine content exceeds the above range, heat may accumulate within the electrolyte, which may increase the risk of thermal runaway of the secondary battery.

For example, the fluorine content may be calculated based on the fluorine content of the above-described fluorinated mono(meth)acrylate compound and the amount of the fluorinated mono(meth)acrylate compound added.

For example, the electrolyte may further include the above-described additive.

FIGS. 1 and 2 are a schematic plan view and a schematic cross-sectional view illustrating a lithium secondary battery according to exemplary embodiments, respectively. For example, FIG. 2 is a cross-sectional view taken along line I-I' of FIG. 1.

The secondary battery structure shown in FIGS. 1 and 2 is schematically illustrated, and the secondary battery structure according to the disclosure of the present application is not limited to the illustrated example.

Referring to FIGS. 1 and 2, the lithium secondary battery may include an electrode assembly 150 including a cathode 100 and an anode 130. The electrode assembly 150 may be accommodated within a case 160 together with the polymer electrolyte according to the above-described exemplary embodiments. For example, the electrode assembly 150 may further include a polymer electrolyte layer 140 interposed between the cathode 100 and the anode 130. Optionally, a separator may further be included between the cathode 100 and the anode 130.

The cathode 100 may include a cathode current collector 105 and a cathode active material layer 110 disposed on at least one surface of the cathode current collector 105.

For example, the cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 µm to 50 µm.

For example, the cathode active material may include a compound capable of reversibly intercalating and deintercalating lithium ions.

In exemplary embodiments, the cathode active material may include a lithium-transition metal oxide. For example, the lithium-transition metal oxide may include nickel (Ni), and may further include at least one selected from the group consisting of cobalt (Co) and manganese (Mn).

For example, the lithium-transition metal oxide may have a structure represented by Formula 7 below.

[Formula 7] Li₁₊ₐNi_{1-(x+y)}CoₓM_{y}O₂

In the Formula 7, a, x and y may satisfy -0.05≤a≤0.15, 0.01≤x≤0.3, and 0.01≤y≤0.3, and M may be one or more elements selected from Mn, Mg, Sr, Ba, B, Al, Si, Ti, Zr and W.

In some embodiments, the cathode active material may include lithium metal phosphate particles having a structure represented by Formula 8 below.

[Formula 8] Li_{w}MₓP_{y}O_{4+z}

In Formula 8, w, x, y and z may satisfy 0.9≤w≤1.2, 0.99≤x≤1.01, 0.9≤y≤1.2, and - 0.1≤z≤0.1, and M may be one or more elements selected from the group consisting of Fe, Ni, Mn, Ti and V.

For example, in Formula 8, M may be Fe, and the cathode active material may include a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 9 below.

For example, an active material core may include a chemical structure or a crystal structure represented by Formula 9 below.

[Formula 9] p[Li₂MnO₃]·(1-p)[LiqJO₂]

In Formula 9, p and q may satisfy 0<p<1, and 0.9≤q≤1.2, and J may include one or more elements selected from Mn, Ni, Fe, Cr, V, Cu, Zn, Ti, Al, Mg and B.

For example, the cathode active material may be dispersed in a solvent to prepare a cathode slurry. The cathode slurry may be coated on the cathode current collector 105, and then dried and roll-pressed to prepare the cathode 100. The coating process may be performed using methods such as gravure coating, slot die coating, simultaneous multilayer die coating, imprinting, doctor blade coating, dip coating, bar coating or casting, or the like, but it is not limited thereto. The cathode slurry may further include a binder, and optionally may further include a conductive material, a thickener and the like.

Non-limiting examples of solvents used in the preparation of the cathode slurry may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer in consideration of enhancing the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; as well as perovskite materials such as LaSrCoO₃, and LaSrMnO_{3.}

As the thickener, for example, carboxymethyl cellulose (CMC) may be used.

The anode 130 may include an anode current collector 125 and an anode active material layer 120 disposed on at least one surface of the anode current collector 125.

For example, non-limiting examples of the anode current collector 125 may include copper foil, nickel foil, stainless steel foil, titanium foil, nickel foam, copper foam, or a polymer substrate coated with a conductive metal. The anode current collector 125 may have, for example, a thickness of 10 µm to 50 µm, but it is not limited thereto.

The anode active material layer may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector 125 may be used as the anode active material layer. In one embodiment, a lithium thin-film layer may also be used as the anode active material layer.

Elements contained in the lithium alloy may include aluminum, zinc, bismuth, cadmium, antimony, silicon, lead, tin, gallium or indium, etc.

The silicon-containing active material may provide further increased capacity characteristics. The silicon-containing active material may include Si, SiOₓ (0<x<2), a silicon-carbon composite, a metal-doped silicate, or SiOₓ (0<x<2). The metal may include lithium and/or magnesium.

For example, the anode active material may be dispersed in a solvent to prepare an anode slurry. The anode slurry may be coated on the anode current collector, and then dried and roll-pressed to fabricate an anode. The coating process may be performed using methods such as gravure coating, slot die coating, simultaneous multilayer die coating, imprinting, doctor blade coating, dip coating, bar coating or casting, or the like, but it is not limited thereto. The anode slurry may further include a binder, and optionally may further include a conductive material, a thickener and the like.

In some embodiments, the anode may include an anode active material layer in the form of a lithium metal formed through a deposition/coating process.

Non-limiting examples of the solvent for the anode slurry may include water, purified water, deionized water, distilled water, ethanol, isopropanol, methanol, acetone, n-propanol, t-butanol, etc.

The above-described materials that can be used when preparing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

In one embodiment, the polymer electrolyte layer 140 may be interposed between the cathode 100 and the anode 130. For example, the polymer electrolyte layer 140 may be interposed as a separator between the cathode 100 and the anode 130. The separator may be configured to prevent an electrical short-circuit between the cathode and the anode, and to allow the flow of ions.

In addition to the polymer electrolyte layer 140, a separator may be further included between the cathode 100 and the anode 130. The separator may include a porous polymer film or a porous non-woven fabric. The porous polymer film may include a polyolefin polymer such as an ethylene polymer, a propylene polymer, an ethylene/butene copolymer, an ethylene/hexene copolymer, or an ethylene/methacrylate copolymer. The porous non-woven fabric may include glass fibers having a high melting point, polyethylene terephthalate fibers and the like.

The separator may also include a ceramic material. For example, inorganic particles may be coated on the polymer film or dispersed in the polymer film to improve heat resistance.

The separator may have a single-layer or multilayer structure including the above-described polymer film and/or non-woven fabric.

In some embodiments, the anode 130 may have a greater area and/or volume than the cathode 100. Accordingly, lithium ions generated from the cathode 100 may migrate smoothly to the anode 130 without precipitation in the middle, for example.

According to exemplary embodiments, an electrode cell may be defined by the cathode 100, the anode 130, and the polymer electrolyte layer 140, and a plurality of electrode cells may be stacked to form, for example, a jelly roll type electrode assembly 150.

In some embodiments, the electrode assembly 150 may have a jelly roll shape formed by winding, stacking, z-folding, or stack-folding the polymer electrolyte layer 140.

Optionally, the electrode cell may be defined by the cathode 100, the anode 130, and the separator, and the jelly roll type electrode assembly 150 may be formed by winding, stacking, z-folding, or stack-folding the separator.

In one embodiment, the electrode assembly 150 may have a jelly roll shape formed by winding the cathode 100, the anode 130, and the polymer electrolyte layer 140 together. In one embodiment, the electrode assembly 150 may have a jelly roll shape in which the notched cathodes and anodes are arranged in spaces formed by repeatedly z-folding the polymer electrolyte layer 140.

In one embodiment, the electrode assembly may be formed by repeatedly stacking the cathode 100, the anode 130, and the polymer electrolyte layer 140, each being individually cut or separated into layers.

For example, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 and connected to electrode leads (a cathode lead 107 and an anode lead 127) that extend or are exposed to the outside of the case 160.

For example, a pouch-type case, a prismatic case, a cylindrical case, or a coin-type case may be used.

The electrode assembly 150 may be accommodated in the case 160 together with an electrolyte to define the lithium secondary battery.

For example, the polymer electrolyte according to the above-described exemplary embodiments may be used in the manufacture of not only lithium secondary batteries, but also sodium secondary batteries, potassium secondary batteries, calcium secondary batteries and the like.

Hereinafter, the embodiments of the present disclosure will be further described with reference to specific experimental examples. The examples and comparative examples included in the experimental examples are merely illustrative of the present disclosure and do not limit the scope of the appended claims.

The invention is also defined by the following aspects:
Aspect 1. A composition for an electrolyte comprising:
   a liquid electrolyte;
   a fluorinated mono(meth)acrylate compound; and
   a polyfunctional (meth)acrylate compound.
Aspect 2. The composition for an electrolyte according to aspect 1, wherein the polyfunctional (meth)acrylate compound comprises one or more of a tri(meth)acrylate compound and a tetra(meth)acrylate compound.
Aspect 3. The composition for an electrolyte according to aspect 1 or aspect 2, wherein the polyfunctional (meth)acrylate compound further comprises ethylene oxide repeating units.
Aspect 4. The composition for an electrolyte according to any one of aspects 1 to 3, wherein the total content of the fluorinated mono(meth)acrylate compound and the polyfunctional (meth)acrylate compound is 3% by weight to 15% by weight based on the total weight of the composition for an electrolyte.
Aspect 5. The composition for an electrolyte according to any one of aspects 1 to 4, wherein a weight ratio of the fluorinated mono(meth)acrylate compound to the polyfunctional (meth)acrylate compound is 0.3 to 2.
Aspect 6. An electrolyte for a secondary battery comprising:
   a liquid electrolyte; and
   a flame-retardant polymer comprising a first moiety derived from a fluorinated mono(meth)acrylate compound and a second moiety derived from a polyfunctional (meth)acrylate compound.
Aspect 7. The electrolyte for a secondary battery according to aspect 6, wherein the first moiety comprises a first repeating unit represented by Formula 1 below: 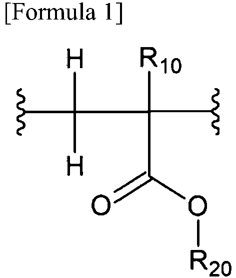
   wherein in Formula 1, R₁₀ is hydrogen or methyl, and
   R₂₀ is a fluorine-substituted alkyl group having 1 to 10 carbon atoms, or a fluorine-substituted alkenyl group having 2 to 10 carbon atoms.
Aspect 8. The electrolyte for a secondary battery according to aspects 6 or 7, wherein the second moiety comprises a second repeating unit represented by Formula 2 or Formula 3 below: 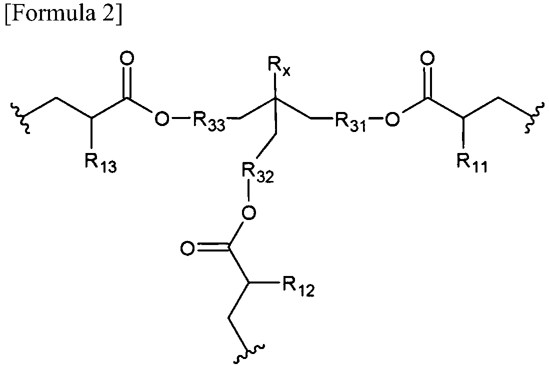 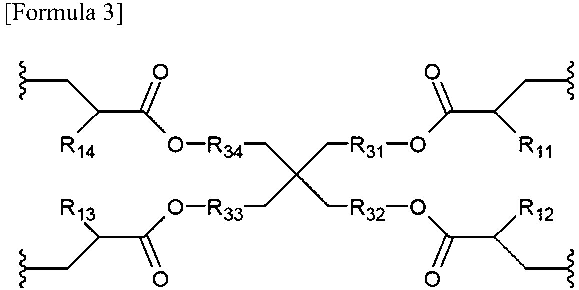
   wherein in Formulas 2 and 3, Rₓ is hydrogen, an alkyl group having 1 to 10 carbon atoms, or an alkenyl group having 2 to 10 carbon atoms;
   R₁₁, R₁₂, R₁₃, and R₁₄ are each independently hydrogen or methyl; and
   R₃₁, R₃₂, R₃₃, and R₃₄ are each independently a direct bond, an alkylene group having 1 to 10 carbon atoms, or -(CH₂CH₂O)ₙ-; and n is an integer of 1 to 10.
Aspect 9. The electrolyte for a secondary battery according to any one of aspects 6 to 8, wherein a fluorine content based on the total weight of the flame-retardant polymer is 0.5% by weight to 20% by weight.
Aspect 10. The electrolyte for a secondary battery according to any one of aspects 6 to 9, wherein a content of the flame-retardant polymer is 3% by weight to 15% by weight based on the total weight of the electrolyte for a secondary battery.
Aspect 11. The electrolyte for a secondary battery according to any one of aspects 6 to 10, wherein a weight ratio of the first moiety to the second moiety is 0.3 to 2.
Aspect 12. The electrolyte for a secondary battery according to any one of aspects 6 to 10, wherein the liquid electrolyte comprises a lithium salt and an organic solvent.
Aspect 13. The electrolyte for a secondary battery according to aspect 12, wherein the organic solvent comprises one or more of a linear carbonate and a cyclic carbonate.
Aspect 14. The electrolyte for a secondary battery according to aspect 13, wherein the linear carbonate comprises one or more of dimethyl carbonate, ethyl methyl carbonate, diethyl carbonate, methyl propyl carbonate, ethyl propyl carbonate, and dipropyl carbonate, and
   the cyclic carbonate comprises one or more of ethylene carbonate, propylene carbonate, and butylene carbonate.
Aspect 15. A secondary battery comprising:
   a case(160);
   an electrode assembly(150) comprising a cathode(100) and an anode(130) accommodated within the case(160); and
   the electrolyte for a secondary battery according to claim 6 injected into the case(160).

### Examples and Comparative Examples

### (1) Preparation of Composition for Electrolyte

A mixed solvent was prepared by dissolving LiPF₆ in ethylene carbonate (EC) and ethyl methyl carbonate (EMC) (volume ratio: 25:75) so as to have a concentration of 1.1 M and stirring for 12 hours. To the mixed solvent, 1 wt% of fluoroethylene carbonate (FEC), 1 wt% of lithium difluorophosphate (LiPO₂F₂), 0.5 wt% of 1,3-propanesulfone (PS), and 0.5 wt% of ethylene sulfate (ESA) were added and stirred for 12 hours to prepare a liquid electrolyte.

A composition for an electrolyte was prepared by mixing the liquid electrolyte with a fluorinated monoacrylate compound and a polyfunctional acrylate compound.

The types and contents of the fluorinated monoacrylate compound and the polyfunctional acrylate compound used in each example and comparative example are shown in Table 1 below. The weight ratio in Table 1 represents the weight ratio of the fluorinated monoacrylate compound to the polyfunctional acrylate compound. The total content in Table 1 represents the total weight of the fluorinated monoacrylate compound and the polyfunctional acrylate compound based on the total weight of the composition for an electrolyte.

### (2) Preparation of Electrolyte

The composition for an electrolyte was stirred for 1 hour, a radical initiator, azobisisobutyronitrile (AIBN), was added and stirred for 30 minutes, and then heated at 70 °C for 1 hour to prepare the electrolyte (a polymer electrolyte).

### (3) Manufacture of Secondary Battery

A slurry was prepared by mixing Li[Ni_{0.88}Co_{0.06}Mn_{0.06}]O₂ as a cathode active material, carbon black as a conductive material, and polyvinylidene fluoride (PVDF) as a binder in a weight ratio of 98:1:1. The slurry was uniformly coated onto an aluminum foil having a thickness of 12 µm and vacuum dried at 130 °C. The dried slurry was roll-pressed to fabricate a cathode having a density of 3.6 g/cm³.

An anode slurry was prepared by mixing natural graphite as an anode active material, SBR/CMC (styrene-butadiene rubber/carboxymethyl cellulose, weight ratio 3:2) as a binder, and carbon black as a conductive material in a weight ratio of 96:3:1. The anode slurry was uniformly coated onto a copper foil, and then dried and roll-pressed to fabricate an anode.

Polyethylene (PE) was prepared as a separator. A pouch cell was constructed by disposing the cathode and anode to face each other with the separator interposed therebetween.

The above-described composition for an electrolyte and the radical initiator were injected into the pouch cell, and the assembled cell was thermally cured in an oven at 70°C for 1 hour to manufacture a secondary battery.

**[TABLE 1]**

| Classification | Fluorinated monoacrylate compound (A) | Polyfunctional acrylate compound (B) | Weight ratio (A:B) | Total content (A+B wt%) |
|---|---|---|---|---|
| Example 1 | A-1 | B-1 | 60:40 | 5 |
| Example 2 | A-1 | B-1 | 50:50 | 5 |
| Example 3 | A-1 | B-1 | 40:60 | 5 |
| Example 4 | A-1 | B-1 | 30:70 | 5 |
| Example 5 | A-1 | B-1 | 60:40 | 10 |
| Example 6 | A-1 | B-2 | 60:40 | 5 |
| Example 7 | A-1 | B-2 | 50:50 | 5 |
| Example 8 | A-1 | B-2 | 40:60 | 5 |
| Example 9 | A-1 | B-2 | 60:40 | 10 |
| Example 10 | A-1 | B-3 | 60:40 | 5 |
| Comparative Example 1 | - | - | - | - |
| Comparative Example 2 | A-1 | - | 100:0 | 5 |
| Comparative Example 3 | - | B-1 | 0:100 | 5 |

The components presented in Table 1 are as follows:
A. Fluorinated monoacrylate compound
   A-1: Hexafluorobutyl acrylate
B. Polyfunctional acrylate compound
   B-1: Ethoxylated trimethylolpropane triacrylate
   B-2: Pentaerythritol tetraacrylate
   B-3: Poly(ethylene glycol) diacrylate

### Experimental Example

### (1) Evaluation of Gelation

The gelation of the electrolytes according to the examples and comparative examples was confirmed by visual observation and evaluated according to the following criteria.

### <Evaluation criteria>

**∘**: Electrolyte cured
×: Electrolyte was not cured or lithium salt was precipitated

### (2) Measurement of Flame-Retardant Properties

The electrolytes according to the examples and comparative examples were impregnated into a 14 pi glass fiber filter, ignited with a torch for 1 second, and the burning time was measured. The self-extinguishing time (SET) value (s/g) was calculated according to Equation 1 below. [Equation 1] $SET valueg \left(s/g\right) = Burning time \left(s\right) \times Electrolyte weight \left(g\right)$

(In Equation 1, the electrolyte weight (g) is obtained by subtracting the weight of the glass fiber filter measured before impregnation with the electrolyte from the weight of the glass fiber filter measured after impregnation with the electrolyte.)

In addition, the secondary batteries according to the examples and comparative examples were heated to 150 °C in a hot box at a rate of 5 °C/min, and the self-heating onset time (the time from reaching 150 °C to thermal runaway due to self-heating) and the thermal runaway temperature (the temperature at which thermal runaway occurred) were measured.

### (3) Evaluation of Rate Characteristics

The secondary batteries according to the examples and comparative examples were charged (0.1C, CC-CV, 4.2 V, 0.05C cut-off) in a 25 °C chamber, and then discharged (CC, 0.1C, 2.5 V cut-off) to activate the cells.

Subsequently, after charging to 4.2 V at room temperature (25°C) (0.33C, CC-CV, 4.2 V, 0.05C cut-off), the discharge capacity at each rate was measured by discharging at 0.33C and 1.0C, respectively (CC, 2.5 V cut-off). The capacity retention was calculated by dividing the discharge capacity measured at 1.0C by the discharge capacity at 0.33C.

The evaluation results of the experimental examples are shown in Table 2 below.

**[TABLE 2]**

| Classification | Evaluation of gelation | Evaluation of flame-retardant properties (s/g) | Self-heating onset time (min) | Thermal runaway temperature (°C) | Capacity retention (%) |
|---|---|---|---|---|---|
| Example 1 | ○ | 6.6 | 7.6 | 396.3 | 84.5 |
| Example 2 | ○ | 8.4 | 7.1 | 401.2 | 85.6 |
| Example 3 | ○ | >40 | 5.5 | 425.5 | 85.8 |
| Example 4 | ○ | >40 | 4.8 | 435.1 | 85.6 |
| Example 5 | ○ | 3.7 | 8.5 | 343.6 | 83.4 |
| Example 6 | ○ | 0.9 | 9.4 | 351.2 | 84.1 |
| Example 7 | ○ | 2.1 | 8.1 | 360.3 | 84.5 |
| Example 8 | ○ | 11.2 | 33.2 | 395.2 | 84.7 |
| Example 9 | ○ | 0.2 | 11.7 | 324.6 | 82.3 |
| Example 10 | × | >40 | 3.1 | 498.3 | 87.1 |
| Comparative Example 1 | × | >40 | 0.3 | >500 | 96.8 |
| Comparative Example 2 | × | >40 | 0.5 | 490.2 | 90.2 |
| Comparative Example 3 | ○ | >40 | 3.5 | 490.5 | 92.9 |

Referring to Table 2, a polymer electrolyte was formed through gelation in the electrolytes according to the examples. In addition, flame-retardant properties (delayed ignition, delayed self-heating, and reduced thermal runaway temperature) of the electrolytes according to the examples and the secondary batteries including the same were confirmed. In addition, the capacity retention of the secondary batteries according to the examples was relatively reduced.

The flame-retardant properties were not confirmed in the electrolytes according to the comparative examples.

In Examples 3 and 4, where the weight ratio of triacrylate compounds to fluorinated monoacrylate compounds was relatively high, flame-retardant properties were relatively reduced.

In Example 8, where the weight ratio of tetraacrylate compounds to fluorinated monoacrylate compounds was relatively high, flame-retardant properties were relatively reduced.

In Example 10, which included a diacrylate compound, a polymer electrolyte was not formed.

### [Description of Reference Numerals]

100: Cathode
105: Cathode current collector
107: Cathode lead
   110: Cathode active material layer
   120: Anode active material layer
125: Anode current collector
127: Anode lead
130: Anode
140: Polymer electrolyte layer
150: Electrode assembly
160: Case

## Claims

1. A composition for an electrolyte comprising:
a liquid electrolyte;
a fluorinated mono(meth)acrylate compound; and
a polyfunctional (meth)acrylate compound.

2. The composition for an electrolyte according to claim 1, wherein the polyfunctional (meth)acrylate compound comprises one or more of a tri(meth)acrylate compound and a tetra(meth)acrylate compound.

3. The composition for an electrolyte according to claim 1 or claim 2, wherein the polyfunctional (meth)acrylate compound further comprises ethylene oxide repeating units.

4. The composition for an electrolyte according to any one of claims 1 to 3, wherein the total content of the fluorinated mono(meth)acrylate compound and the polyfunctional (meth)acrylate compound is 3% by weight to 15% by weight based on the total weight of the composition for an electrolyte.

5. The composition for an electrolyte according to any one of claims 1 to 4, wherein a weight ratio of the fluorinated mono(meth)acrylate compound to the polyfunctional (meth)acrylate compound is 0.3 to 2.

6. An electrolyte for a secondary battery comprising:
a liquid electrolyte; and
a flame-retardant polymer comprising a first moiety derived from a fluorinated mono(meth)acrylate compound and a second moiety derived from a polyfunctional (meth)acrylate compound.

7. The electrolyte for a secondary battery according to claim 6, wherein the first moiety comprises a first repeating unit represented by Formula 1 below: 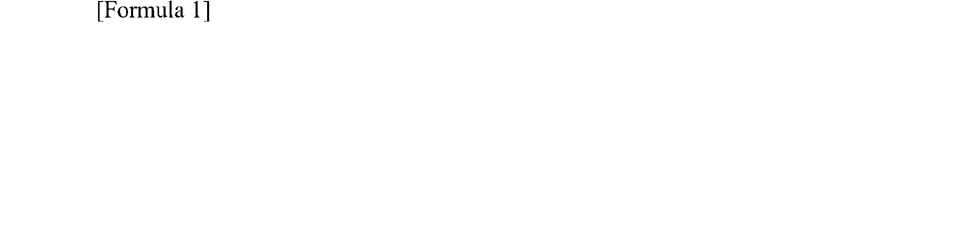 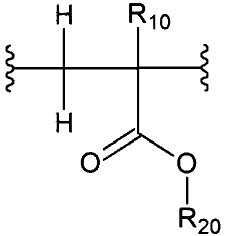
wherein in Formula 1, R₁₀ is hydrogen or methyl, and
R₂₀ is a fluorine-substituted alkyl group having 1 to 10 carbon atoms, or a fluorine-substituted alkenyl group having 2 to 10 carbon atoms.

8. The electrolyte for a secondary battery according to claims 6 or 7, wherein the second moiety comprises a second repeating unit represented by Formula 2 or Formula 3 below: 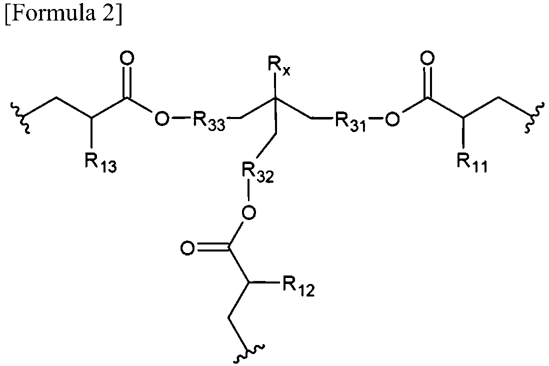 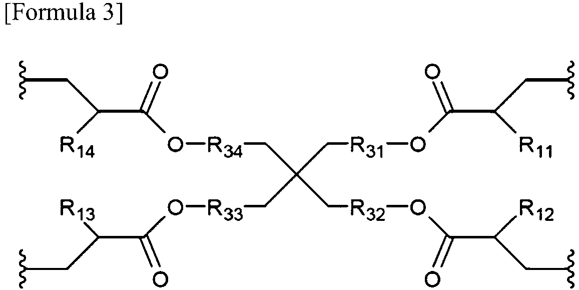
wherein in Formulas 2 and 3, Rₓ is hydrogen, an alkyl group having 1 to 10 carbon atoms, or an alkenyl group having 2 to 10 carbon atoms;
R₁₁, R₁₂, R₁₃, and R₁₄ are each independently hydrogen or methyl; and
R₃₁, R₃₂, R₃₃, and R₃₄ are each independently a direct bond, an alkylene group having 1 to 10 carbon atoms, or -(CH₂CH₂O)ₙ-; and n is an integer of 1 to 10.

9. The electrolyte for a secondary battery according to any one of claims 6 to 8, wherein a fluorine content based on the total weight of the flame-retardant polymer is 0.5% by weight to 20% by weight.

10. The electrolyte for a secondary battery according to any one of claims 6 to 9, wherein a content of the flame-retardant polymer is 3% by weight to 15% by weight based on the total weight of the electrolyte for a secondary battery.

11. The electrolyte for a secondary battery according to any one of claims 6 to 10, wherein a weight ratio of the first moiety to the second moiety is 0.3 to 2.

12. The electrolyte for a secondary battery according to any one of claims 6 to 11, wherein the liquid electrolyte comprises a lithium salt and an organic solvent.

13. The electrolyte for a secondary battery according to claim 12, wherein the organic solvent comprises one or more of a linear carbonate and a cyclic carbonate.

14. The electrolyte for a secondary battery according to claim 13, wherein the linear carbonate comprises one or more of dimethyl carbonate, ethyl methyl carbonate, diethyl carbonate, methyl propyl carbonate, ethyl propyl carbonate, and dipropyl carbonate, and
the cyclic carbonate comprises one or more of ethylene carbonate, propylene carbonate, and butylene carbonate.

15. A secondary battery comprising:
a case(160);
an electrode assembly(150) comprising a cathode(100) and an anode(130) accommodated within the case(160); and
the electrolyte for a secondary battery according to claim 6 injected into the case.
